# EUROPÄISCHE PATENTSCHRIFT

(11) **EP 3 743 710 B1**
(45) Veröffentlichungstag und Bekanntmachung des Hinweises auf die Patenterteilung: **22.02.2023**
(21) Anmeldenummer: 19746061.1
(22) Anmeldetag: 23.07.2019
(51) Int. Cl.: G01N 21/3504, G01J 3/02

(54) **OPTISCHES DETEKTIONSSYSTEM ZUM DETEKTIEREN EINER SUBSTANZ IN EINEM MESSBEREICH**
OPTICAL DETECTION SYSTEM FOR DETECTING A SUBTANCE IN A MEASUREMENT REGION
SYSTÈME DE DÉTECTION OPTIQUE POUR DÉTECTER UNE SUBSTANCE DANS UNE RÉGION DE MESURE

(30) Priorität: 27.07.2018 DE 102018005915
(43) Veröffentlichungstag der Anmeldung: 02.12.2020
(73) Patentinhaber: Dräger Safety AG & Co. KGaA, 23560 Lübeck (DE)
(72) Erfinder: SCHMIDT-KAEDING, Patrick, 23560 Lübeck (DE)
(74) Vertreter: Meyer-Gramann, Klaus Dieter
(86) Internationale Anmeldenummer: PCT/EP2019/069807
(87) Internationale Veröffentlichungsnummer: WO 2020/020891

(56) Entgegenhaltungen:
- EP-A1- 2 562 520
- WO-A1-2014/170828
- US-B2- 9 448 114

## Beschreibung

Die vorliegende Erfindung betrifft ein Detektionssystem, welches eine Homogenisierungsvorrichtung und einen Empfänger sowie optional einen Sender zum Aussenden eines Photonenfelds und eine Auswerteeinheit umfasst.

Mithilfe eines derartigen Detektionssystems lässt sich das Vorhandensein mindestens eines bestimmten Fluids in einem zu überwachenden Messbereich detektieren. Der Messbereich liegt z.B. in einer Ölförderanlage, einer Raffinerie oder einer sonstigen chemischen Anlage oder entlang einer Pipeline. Ein entsprechend ausgestaltetes Detektionssystem vermag darüber hinaus den Anteil mindestens einer bestimmten Substanz in dem Fluid zu detektieren. Der optionale Sender sendet ein Photonenfeld aus. Das ausgesandte Photonenfeld interagiert mit bestimmten Fluiden. Durch diese Interaktion wird das Photonenfeld verändert. Der Empfänger empfängt das durch Interaktion veränderte Photonenfeld und erzeugt Signale, die von der Veränderung abhängen. Die optionale Auswerteeinheit wertet diese Signale aus und vermag zu veranlassen, dass entsprechende Meldungen ausgegeben werden. Insbesondere vermag ein solches Detektionssystem einen Alarm auszugeben, wenn ein bestimmtes Fluid, beispielsweise ein toxisches oder explosives Gas, im Messbereich detektiert wurde oder die Konzentration oberhalb eines Schwellwerts liegt.

Unterschiedliche Detektionssysteme mit Diffusoren und/oder Homogenisierern für Photonenfelder sind bekannt geworden.

WO 2014/170828 A1 zeigt eine Vorrichtung 1 zur Spektroskopie mittels SCAR (saturated absorption cavity ring-down spectroscopy). Eine Lichtquelle 2 erzeugt Laserlicht mit kontinuierlichen Wellen und veränderlicher Frequenz. Ein zylinderförmiges Gehäuse 3 mit zwei Spiegeln 4a und 4b nimmt das zu untersuchende Gas durch einen Einlass 5 auf. Ein Fotodetektor 7 misst die Strahlung, die aus dem Gehäuse 3 auftritt. Zwischen dem hinteren Spiegel 4b und dem Fotodetektor 7 ist ein Diffusor 8 angeordnet, welcher das austretende Laserlicht zerstreut. Zwei Vorverstärker 12 und 13 verstärkten die Signale vom Fotodetektor 7, und ein Prozessor 14 wertet die verstärkten Signale aus.

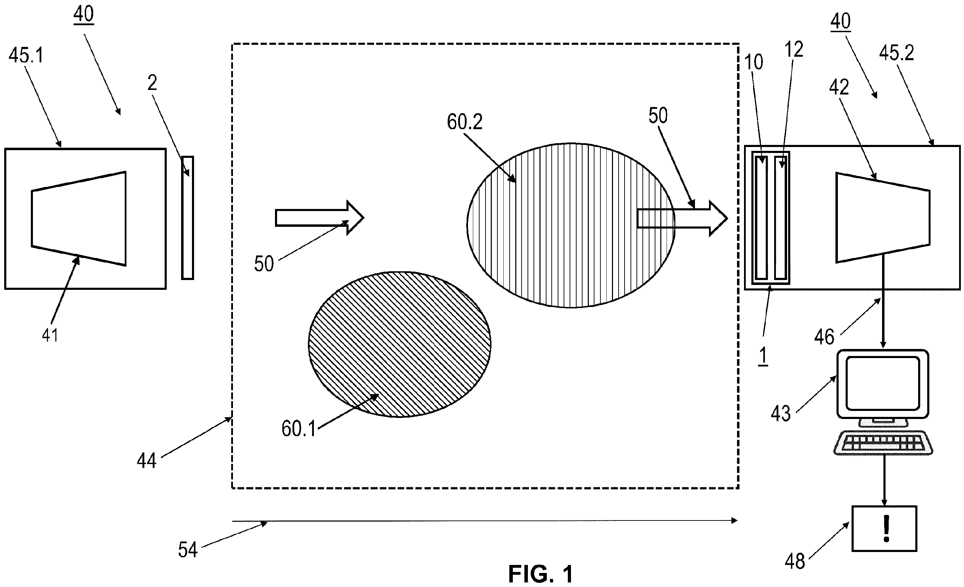

In US 2017/0292908 A1 wird ein in einer Hand zu tragendes Gerät beschrieben, um Lebensmittel zu untersuchen, vgl. dort Figur 1. Eine Lichtquelle (illumination module 140) sendet Licht im sichtbaren oder nicht sichtbaren Bereich auf einen zu untersuchenden Gegenstand (sample S) aus. Ein Spektrometer 160 misst das reflektierte Licht. Die Lichtquelle 140 umfasst eine Diffusionsvorrichtung (radiation diffusion unit 213), vgl. Figur 12. Gesehen in die Ausstrahlrichtung umfasst diese Diffusionsvorrichtung 213 mehrere LEDs 210, ein Abdeckglas 230, einen ersten Diffusor 215, eine konvexe Linse 225, einen zweiten Diffusor 220 und ein weiteres Abdeckglas 230. Der Raum zwischen der Sammellinse 225 und dem zweiten Diffusor 220 wird von zwei Licht absorbierenden Seitenwänden begrenzt.

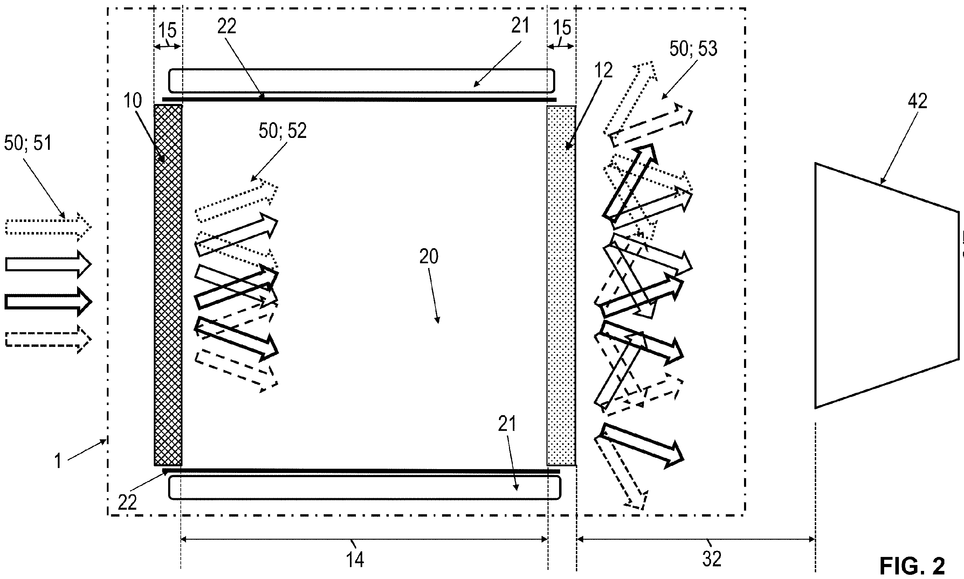

In EP 1546690 B1 wird eine Vorrichtung beschrieben, um berührungslos eine längliche Bahn eines Produkts, beispielsweise eine Papierbahn 90, zu untersuchen. Die Papierbahn 90 wird durch einen Spalt hindurch gezogen, der auf der einen Seite von einer Lichtquelle 22 mit einem ersten Homogenisierer (light source homogenizer 50) und auf der anderen Seite von einem zweiten Homogenisierer (detector light homogenizer 62) begrenzt wird. Beide Homogenisierer 50, 62 haben jeweils eine halbkugelförmige Oberfläche, welche Lichtstrahlen in verschiedene Richtungen reflektiert, vgl. Fig. 2a.

EP 2562520 A1 zeigt ein optisches Detektionssystem (vgl. dort Fig. 1, 11), welches Licht aus einem Messbereich detektiert. Eine Sammellinse 11a flussabwärts vom Messbereich fokussiert das Licht auf einen ersten Diffusor (diffusion plate 19). Das vom ersten Diffusor gestreute Licht durchdringt einen flussabwärts angeordneten zweiten Diffusor (diffusion plates 13A, 13B, 13C, C). Das Licht trifft anschließend auf einen Empfänger (light receiving sensors 13B, 14B, 15B) auf.

Das Detektionssystem (spectrometer 102) von US 9448114 B2 (vgl. dort Fig. umfasst ein Spektrometermodul 160 mit mehreren Diffusoren. Flussabwärts von einem Messbereich ist ein erster Diffusor (first diffuser 164) angeordnet, flussabwärts vom ersten Diffusor 164 ein zweiter Diffusor (second diffuser 166). Flussabwärts vom zweiten Diffusor ist ein Linsen-Array (lens array 174) angeordnet, das durch den ersten und den zweiten Diffusor transmittiertes Licht vom Messbereich auf einen Empfänger (detector 190) fokussiert.

Der Erfindung liegt die Aufgabe zugrunde, ein Detektionssystem bereitzustellen, welches eine platzsparende Bauweise aufweist.

Die Aufgabe wird durch ein Detektionssystem mit den Merkmalen des Anspruchs 1 gelöst. Vorteilhafte Ausgestaltungen sind in den Unteransprüchen angegeben.

Das Detektionssystem vermag eine Substanz in einem Messbereich zu detektieren. Aus diesem Messbereich tritt ein Photonenfeld in eine Feldrichtung aus.

Das Detektionssystem umfasst eine empfängerseitige Homogenisierungsvorrichtung mit einem ersten Diffusor und einem zweiten Diffusor sowie einen Empfänger. Gesehen in Feldrichtung sind der erste Diffusor flussabwärts von dem Messbereich und der zweite Diffusor flussabwärts vom ersten Diffusor angeordnet. Gesehen in Feldrichtung ist der zweite Diffusor mit einem Diffusor-Abstand flussabwärts zum ersten Diffusor angeordnet. Der Empfänger ist flussabwärts vom zweiten Diffusor angeordnet. Somit ist die gesamte Homogenisierungsvorrichtung - oder wenigstens ein Bestandteil mit den beiden Diffusoren - zwischen den Messbereich und dem Empfänger angeordnet. Wenigstens ein Teil des Photonenfeldes, welches in der Flussrichtung aus dem Messbereich austritt, durchdringt beide Diffusoren und erreicht den Empfänger. Der erste Diffusor vermag ein Eingangs-Photonenfeld, welches auf einen zum Messbereich hin zeigenden Eingangsbereich der Homogenisierungsvorrichtung und/oder auf den ersten Diffusor auftrifft, zu homogenisieren und dadurch ein Zwischen-Photonenfeld zu erzeugen. Der zweite Diffusor vermag das Zwischen-Photonenfeld weiter zu homogenisieren und dadurch ein Ausgangs Photonenfeld zu erzeugen. Dieses Ausgangs-Photonenfeld pflanzt sich in Feldrichtung auf den Empfänger zu fort.

Unter der "Feldrichtung" des Photonenfeldes wird diejenige Ausbreitungsrichtung verstanden, in der sich der größte Anteil der Intensität des Photonenfeldes ausbreitet. Das Photonenfeld durchdringt mindestens in diese Feldrichtung die Homogenisierungsvorrichtung vollständig oder wenigstens teilweise und/oder wird von ihr reflektiert. Diese Feldrichtung kann sich auf dem Weg des Photonenfeldes von einem Sender zum Empfänger mindestens einmal verändern, insbesondere durch Reflexion, z.B. an einem Diffusor oder einer Wand der Homogenisierungsvorrichtung.

Die "Homogenität" eines Photonenfeldes ist ein Maß dafür, wie stark die Intensität des Photonenfeldes räumlich variiert, also wie stark die Intensität von dem jeweiligen Ort im Photonenfeld abhängt. Bei einem ideal homogenen Photonenfeld ist die Intensität über die gesamte Ausdehnung des Photonenfeldes gleich. Beispiele für inhomogene Photonenfelder, also Felder mit einer von Ort zu Ort stark variierenden Intensität, sind das Photonenfeld eines stark kollimierten und/oder stark fokussierten Lichtbündels sowie das Photonenfeld eines Lasersenders. Eine ambiente und ungerichtete Beleuchtung erzeugt in der Regel ein Photonenfeld mit hoher Homogenität.

Eine Homogenisierungsvorrichtung vermag die Homogenität eines Photonenfeldes zu erhöhen. Eine hohe Homogenität ist insbesondere aus folgenden Gründen von Vorteil: Die Signale, welche den Empfänger erreichen, sollen in möglichst großem Maße nur von den zu detektierenden Substanzen abhängen und möglichst wenig von störenden Einflüssen beeinträchtigt werden. Weiterhin soll der Empfänger idealerweise ein gleichbleibende und reproduzierbares Signal erzeugen. Um dieses Ziel zu erreichen, ist es in der Regel erforderlich, den Empfänger an einer bestimmten Position relativ zum Messbereich und/oder relativ zu einem Sender zu positionieren. Die tatsächliche Relativ-Position des Empfängers darf von der vorgegebenen Soll-Position um nicht mehr als eine Toleranz abweichen. In der Regel ist diese Toleranz umso höher, je größer die Homogenität des auf den Empfänger auftreffenden Photonenfeldes ist. Eine größere Homogenität führt also zu einer größeren Fehlertoleranz bei der Positionierung des Empfängers. Die Anzahl von nicht erkannten Gefahrensituationen und/oder Fehlalarmen wird - verglichen mit einer geringeren Homogenität - reduziert.

Wenigstens ein Teil des von einem Sender ausgesandten oder auf andere Weise erzeugten Photonenfelds durchdringt zunächst den Messbereich und dann die Homogenisierungsvorrichtung und erreicht nach der Homogenisierung den Empfänger. Die Homogenisierungsvorrichtung homogenisiert also das Photonenfeld, welches bereits den Messbereich durchdrungen hat. Das Photonenfeld, welches auf den Empfänger auftritt, ist daher stärker homogenisiert, als wenn die Homogenisierungsvorrichtung flussaufwärts von dem Messbereich positioniert wäre. Bei einer Homogenisierungsvorrichtung flussaufwärts von dem Messbereich könnte ein Fluid im Messbereich die Homogenität des Photonenfeldes wieder reduzieren und damit den oben erwähnten Vorteil einer Homogenisierungsvorrichtung teilweise wieder zunichte machen.

Erfindungsgemäß umfasst die Homogenisierungsvorrichtung einen ersten Diffusor und einen zweiten Diffusor, zwischen denen ein Diffusor-Abstand auftritt. Gesehen in die Feldrichtung durchdringt wenigstens ein Teil des ausgesandten Photonenfeldes zunächst den Messbereich, dann den ersten Diffusor, dann den Diffusor-Abstand und dann den zweiten Diffusor und erreicht anschließend den Empfänger. Der erste Diffusor erzeugt aus dem Eingangs-Photonenfeld ein Zwischen-Photonenfeld. Der zweite Diffusor erzeugt aus dem Zwischen-Photonenfeld das Ausgangs-Photonenfeld. Das Photonenfeld wird also durch eine mindestens zweistufig arbeitende Homogenisierungsvorrichtung homogenisiert und nicht in nur einer einzigen Stufe. Das Zwischen-Photonenfeld hat in der Regel eine höhere Homogenität als das Eingangs-Photonenfeld, also eine geringere Ortsabhängigkeit der Intensität, und das Ausgangs-Photonenfeld eine höhere Homogenität als das Zwischen-Photonenfeld. Das auf diese Weise in zwei Stufen erzeugte Ausgangs-Photonenfeld ist in der Regel deutlich besser homogenisiert als bei einer einstufigen Vorrichtung. Insbesondere ist in der Regel die Intensität des Ausgangs-Photonenfeldes in einer Ebene, die senkrecht auf der Feldrichtung steht, gleichmäßiger über die Ebene verteilt als bei einer einstufigen Vorrichtung. Zum einen erhöht die höhere Homogenität des auf den Empfänger auftreffenden Photonenfeldes die Fehlertoleranz bei der Positionierung des Empfängers, was oben bereits dargelegt wurde. Die höhere Homogenität und/oder die resultierende höhere Fehlertoleranz reduzieren in vielen Fällen die Anzahl von Fehlalarmen oder sonstigen fehlerhaften Detektionen verglichen mit einer einstufigen Homogenisierungsvorrichtung.

Damit der Empfänger ausreichend zuverlässige Signale erzeugen kann und eine optionale Auswerteeinheit diese Signale ausreichend zuverlässig auswerten kann, ist es weiterhin erforderlich, dass das Ausgangs-Photonenfeld mit einer ausreichend großen Intensität auf den Empfänger auftrifft. Eine denkbare Möglichkeit, um dies zu gewährleisten, besteht darin, dass ein Sender mit einer ausreichend großen Sendeleistung das Photonenfeld aussendet. Gerade in explosionsgefährdeten Bereichen, beispielsweise in Ölförderanlagen oder chemischen Anlagen, ist die Sendeleistung aber begrenzt, um sicher auszuschließen, dass der Sender eine Explosion oder einen Brand auslöst. Mit einer einstufigen Homogenisierungsvorrichtung lässt sich in vielen Anwendungsfällen daher die gewünschte Homogenisierung nicht erzielen. Insbesondere bei einer Anwendung in explosionsgefährdeten Bereichen lässt sich in vielen Fällen hingegen dank der Erfindung trotz der Randbedingungen der gewünschte Effekt erzielen, dass die erfindungsgemäße Homogenisierungsvorrichtung einen geringeren Intensitäts-Verlust als andere Detektionssysteme erzielt.

Wie bereits dargelegt, tritt erfindungsgemäß zwischen dem ersten Diffusor und dem zweiten Diffusor aufgrund des Diffusor-Abstands ein Zwischenraum auf. Das vom ersten Diffusor erzeugte Zwischen-Photonenfeld kann sich in dem Raum zwischen den beiden Diffusoren ausbreiten. In vielen Fällen wird ermöglicht, dass sich Bereiche unterschiedlicher Intensität des Photonenfelds in diesem Zwischenraum durchmischen. Insbesondere wegen des Zwischenraums zwischen den beiden Diffusoren weist das Ausgangs-Photonenfeld eine höhere Homogenität auf, als wenn die beiden Diffusoren ohne Abstand direkt aneinander grenzen würden oder als wenn eine Homogenisierungsvorrichtung mit nur einem einzigen Diffusor verwendet werden würde. Insbesondere wegen der Durchmischung, die in vielen Fällen in diesem Zwischenraum erzielt wird, wird die gleiche Vergrößerung der Homogenisierung bei einer geringeren Absorption, Rückstrahlung, Rückstreuung und/oder Reduzierung der Intensität erreicht, verglichen mit einer Ausgestaltung, bei der die Homogenisierungsvorrichtung nur einen einzigen Diffusor oder zwei unmittelbar aneinander angrenzende Diffusoren aufweist.

Zwangsläufig absorbiert eine Homogenisierungsvorrichtung einen Teil des auftreffenden Photonenfeldes, reduziert also dessen Intensität oder Leistung. Eine einstufige Homogenisierungsvorrichtung, welche die gleiche Homogenisierung bewirkt wie eine zweistufige Homogenisierungsvorrichtung, hat keinen solchen Zwischenraum und reduziert in der Regel stärker die Intensität und/oder erfordert eine höhere Sendeleistung. Diese Reduzierung der Intensität und diese höhere Sendeleistung sind in der Regel unerwünscht.

Die Erfindung ermöglicht es, den ersten Diffusor und/oder den zweiten Diffusor derart zu positionieren und auszurichten, dass sie am Ort der jeweils größten Intensität des jeweiligen Photonenfeldes (Eingangs-Photonenfeld bzw. Zwischen-Photonenfeld) angeordnet sind. Diese Ausgestaltung erhöht die Intensität, mit der das Photonenfeld auf den Empfänger auftrifft, verglichen mit anderen denkbaren Positionierungen, ohne die Sendeleistung erhöhen zu müssen. Weil zwei Diffusoren räumlich beabstandet positioniert werden, hat man dank der Erfindung beim Entwerfen eines erfindungsgemäßen Detektionssystems einen zusätzlichen Freiheitsgrad, nämlich die Position des einen Diffusors relativ zum anderen Diffusor.

In einer Ausgestaltung lässt sich die Position der Homogenisierungsvorrichtung relativ zum Empfänger nicht verändern. Dadurch legt im Wesentlichen die konstruktionsgemäße Anordnung der Homogenisierungsvorrichtung und des Empfängers fest, mit welcher Homogenisierung das Photonenfeld auf den Empfänger auftrifft. Eine mögliche Fehlerquelle, die aus einer falschen oder ungewollt variierenden Positionierung der Homogenisierungsvorrichtung relativ zum Empfänger resultiert, wird durch diese Ausgestaltung ausgeschlossen. In vielen Fällen wird sichergestellt, dass die zweistufige Homogenisierungsvorrichtung stets die gleiche homogenisierende Wirkung erzielt.

Erfindungsgemäß tritt zwischen dem ersten Diffusor und dem zweiten Diffusor ein Diffusor-Abstand auf. Dadurch wird zwischen den beiden Diffusoren ein Zwischenraum gebildet, in dem das Zwischen-Photonenfeld sich durchmischen kann. In einer Ausgestaltung wird dieser Zwischenraum von den beiden Diffusoren sowie von einer Mantelfläche begrenzt. Die Mantelfläche verhindert das Eindringen von störender Fremdstrahlung in den Zwischenraum und /oder, dass das ausgesandte Photonenfeld aus dem Zwischenraum austritt, was die Intensität verringern würde. Die Mantelfläche kann als eine einzelne zusammenhängende Fläche ausgebildet sein oder auch aus mehreren einzelnen Flächenelementen zusammengesetzt sein.

Bevorzugt vermag das Zwischen-Photonenfeld den Zwischenraum zu durchdringen, ohne im Zwischenraum diffus gestreut zu werden. Insbesondere ist bevorzugt in diesem Zwischenraum kein weiterer Diffusor angeordnet. Diese Ausgestaltung führt zu einer besonders geringen Reduzierung der Intensität im Zwischenraum, insbesondere weil das Photonenfeld nicht wesentlich absorbiert oder rückgestreut wird.

In einer Ausgestaltung ist die Mantelfläche, die den Zwischenraum begrenzt, als ein Spiegel ausgestaltet oder umfasst mindestens einen Spiegel. Der oder jeder Spiegel zeigt zum Zwischenraum hin und reflektiert ein auftreffendes Photonenfeld vollständig oder wenigstens teilweise. Die Ausgestaltung mit dem Spiegel hat insbesondere folgenden Vorteil: Ohne einen Spiegel könnte ein relevanter Teil des Photonenfeldes die Mantelfläche durchdringen und dadurch nicht den zweiten Diffusor und daher in der Regel auch nicht den Empfänger erreichen. Dadurch würde die Intensität des auf den Empfänger auftreffenden Photonenfeldes reduziert, was auch die Erkennungsrate des Detektionssystems reduzieren könnte. Der oder jeder Spiegel reflektiert hingegen auftreffende Photonen wieder in den Zwischenraum hinein und verhindert, dass diese Photonen den Zwischenraum verlassen. Bekanntlich ist der Einfallswinkel idealerweise gleich dem Ausfallswinkel der Feldrichtung, sodass sich der oder jeder Spiegel so anordnen lässt, dass er das auftreffende Photonenfeld auf den zweiten Diffusor richtet.

In einer Ausgestaltung ist mindestens einer der Diffusoren als ein Volumen-Diffusor ausgestaltet. Bevorzugt ist der erste Diffusor ein Volumen-Diffusor, und bevorzugt ist der Volumen-Diffusor ein Facetten-Diffusor. Ein Volumen-Diffusor steigerte Homogenisierung eines Photonenfeldes, welches den Volumen-Diffusor durchdringt, auf dem gesamten Weg von der Eingangsseite bis zur Ausgangsseite des Volumen-Diffusors. Dadurch ist bei gleicher Dicke und daher gleicher Reduzierung der Intensität die Homogenisierungswirkung-häufig stärker als bei anderen Ausgestaltungen eines Diffusors.

In einer Ausgestaltung ist mindestens einer der beiden Diffusoren, bevorzugt der zweite Diffusor, als ein Oberflächen-Diffusor ausgestaltet. Besonders bevorzugt weist dieser Oberflächen-Diffusor eine aufgeraute Oberfläche auf. Ein solcher Oberflächen-Diffusor reduziert die Leistung oder Intensität eines auftreffenden Photonenfeldes häufig weniger als andere mögliche Ausgestaltungen eines Diffusors.

Möglich ist, dass der erste Diffusor und/oder der zweite Diffusor dazu ausgestaltet ist, das Photonenfeld diffus zu reflektieren. "Diffuses Reflektieren" bedeutet, dass der Diffusor beim Reflektieren das Photonenfeld streut und dadurch homogenisiert. Die Feldrichtung des Photonenfeldes ändert sich abhängig von der Reflexion, in der Regel dergestalt, dass ein Einfallswinkel der Feldrichtung bezüglich des reflektierenden Diffusors gleich einem Ausfallswinkel der Feldrichtung ist. Der diffus reflektierende Diffusor weist bevorzugt eine entsprechend strukturierte Oberfläche auf. Bevorzugt bewirkt diese Oberfläche das gewünschte diffuse Reflektieren. Beispielsweise wird bei der Herstellung des Diffusors eine intrinsisch spiegelnde Oberfläche, beispielsweise eine Metallschicht, aufgeraut, um das diffuse Reflektieren zu bewirken. Weil der Diffusor die Feldrichtung des Photonenfelds verändert, lässt ein Detektionssystem mit einem solchen Diffusor sich in manchen Fällen besser als andere Detektionssystem an die vorgegebenen Gegebenheiten eines Messbereichs anpassen.

In einer Ausgestaltung ist der erste Diffusor und/oder der zweite Diffusor als ein transmittierender Diffusor ausgestaltet. Ein Photonenfeld durchdringt einen transmittierenden Diffusor, idealerweise ohne dass sich dessen Feldrichtung ändert. Bevorzugt ist über einen transmittierenden Diffusor eine Vielzahl von Streuzentren verteilt. Dadurch wird das Photonenfeld beim Durchgang durch den Diffusor diffus gestreut. Alternativ oder zusätzlich zu den Streuzentren kann eine Oberfläche des Diffusors dazu ausgestaltet sein, das Photonenfeld diffus zu transmittieren, beispielsweise durch eine angeraute und/oder mit Sand gestrahlte Oberfläche. Möglich ist, dass nur die Oberfläche das Photonenfeld aktiv diffus streut und der Rest des Diffusors das Photonenfeld im Wesentlichen unverändert transmittiert und beispielsweise für das Photonenfeld vollständig transparent ist. Beispielsweise ist eine diffus transmittierende Oberfläche auf einem ansonsten transparenten Träger z.B. aus Glas oder transparentem Kunststoff aufgebracht. Möglich ist auch, dass nur ein Bereich eines Diffusors Streuzentren aufweist und der Rest dieses Diffusors transparent ausgestaltet ist.

Erfindungsgemäß umfasst die Homogenisierungsvorrichtung zusätzlich ein Optikelement, welches für das Photonenfeld optisch durchlässig ist, bevorzugt keine diffus streuende Wirkung auf das Photonenfeld ausübt und als Sammellinse ausgestaltet ist. Erfindungsgemäß ist der erste Diffusor an diesem Optikelement angeordnet oder bildet einen Bestandteil dieses Optikelements. Diese Ausgestaltung spart Platz ein, weil die Abmessung in der Feldrichtung reduziert ist verglichen mit einer Ausgestaltung, bei der jeweils ein Abstand zwischen dem Optikelement und jedem Diffusor auftritt.

Erfindungsgemäß tritt zwischen dem ersten Diffusor und dem zweiten Diffusor ein Diffusor-Abstand auf. Gesehen in die Feldrichtung liegt dieser Diffusor-Abstand bevorzugt zwischen 1 mm und 30 mm, besonders bevorzugt zwischen 2 mm und 20 mm. In einer Ausführungsform beträgt der Diffusor-Abstand 10 mm.

Erfindungsgemäß trifft das Photonenfeld nach dem Durchgang durch den Messbereich und nach der zweistufig durchgeführten Homogenisierung auf den Empfänger auf. In einer Ausgestaltung tritt zwischen der Homogenisierungseinrichtung und dem Empfänger gesehen in die Feldrichtung ebenfalls ein Abstand auf, nämlich ein Empfänger-Abstand. Unter dem Empfänger-Abstand wird der kürzeste geometrische Weg verstanden, den ein Photon vom zweiten Diffusor zur empfangenen Oberfläche des Empfängers zurücklegen kann. Der Empfänger-Abstand ist der Abstand zwischen Homogenisierungsvorrichtung und Empfänger. Bevorzugt liegt dieser Empfänger-Abstand gesehen in die Feldrichtung zwischen 1 mm und 30 mm, besonders bevorzugt zwischen 2 mm und 20 mm. In einer Ausführungsform beträgt der Empfänger-Abstand 10 mm.

In einer Ausgestaltung umfasst die Homogenisierungsvorrichtung einen dritten Diffusor, der flussabwärts vom ersten Diffusor und flussaufwärts vom zweiten Diffusor oder auch flussaufwärts vom ersten Diffusor oder flussabwärts vom zweiten Diffusor angeordnet ist. Der erste Diffusor erzeugt aus dem Eingangs-Photonenfeld ein erstes Zwischen-Photonenfeld. Der dritte Diffusor zwischen dem ersten und dem zweiten Diffusor erzeugt aus dem ersten Zwischen-Photonenfeld ein zweites Zwischen-Photonenfeld. Der zweite Diffusor erzeugt aus dem zweiten Zwischen-Photonenfeld das Ausgangs-Photonenfeld. Oder der zweite Diffusor erzeugt ein zweites Zwischen-Photonenfeld, und der dritte Diffusor erzeugt aus dem zweiten Zwischen-Photonenfeld das Ausgangs-Photonenfeld. In manchen Anwendungen führt der dritte Diffusor zu einer noch größeren Homogenisierung des Photonenfeldes.

Möglich ist, dass das Photonenfeld von mindestens einer nicht zum Detektionssystem gehörenden Quelle erzeugt und abgestrahlt wird. In einer Ausgestaltung umfasst das Detektionssystem hingegen weiterhin einen Sender. Dieser Sender vermag ein Photonenfeld in den Messbereich hinein auszusenden. Der Sender arbeitet dergestalt, dass wenigstens ein Teil des ausgesandten Photonenfelds den Messbereich und die Homogenisierungsvorrichtung durchdringt und auf den Empfänger auftrifft. Der Sender erleichtert es, ein reproduzierbares Photonenfeld zu erzeugen.

In einer Ausgestaltung lässt sich die Position der Homogenisierungsvorrichtung relativ zum Sender verändern, insbesondere der Abstand - gesehen in die Feldrichtung -zwischen der Homogenisierungsvorrichtung und dem Sender verändern. Diese Ausgestaltung erleichtert es, das erfindungsgemäße Detektionssystem an die Abmessungen und sonstigen Gegebenheiten und Randbedingungen eines vorgegebenen Messbereichs anzupassen. Diese Anpassung wäre schwieriger, in vielen Fällen sogar unmöglich, wenn der Sender und die Homogenisierungsvorrichtung relativ zueinander unveränderbar angeordnet wären.

Bevorzugt lässt der Abstand sich mindestens verdoppeln oder halbieren. Bevorzugt gibt es keine mechanische Verbindung zwischen dem Sender und dem Empfänger. Eine solche mechanische Verbindung reduziert in manchen Fällen die Einsatzmöglichkeiten des Detektionssystem. Besonders bevorzugt lässt der Abstand zwischen der Homogenisierungsvorrichtung und dem Sender sich zwischen einem vorgegebenen Mindest-Abstand und einem vorgegebenen Höchst-Abstand stufenlos verändern. Der Mindest-Abstand beträgt beispielsweise 1m, 2m oder 4m. Bei einem Abstand oberhalb des Mindest-Abstands erzielt die Homogenisierungsvorrichtung eine ausreichende Homogenisierung des ausgesandten Photonenfeldes. Der Höchst-Abstand liegt beispielsweise bei 100 m, 200 m oder 400 m. Bis zu diesem Höchst-Abstand vermag der Sender das Photonenfeld noch mit ausreichender Leistung und Intensität auszusenden, wobei vorgegebene Anforderungen an die Gefahrenvermeidung, insbesondere an die Vermeidung eine Explosionsgefahr, noch eingehalten werden.

In einer Ausgestaltung liegen der Sender, die Homogenisierungsvorrichtung und der Empfänger auf einer Linie. Bevorzugt erstreckt die Feldrichtung sich entlang dieser Linie. Diese Ausgestaltung führt oft zu einer besonders geringen Reduzierung der vor Photonenfeld Intensität zwischen dem Sender und dem Empfänger. In einer anderen Ausgestaltung ist die Feldrichtung keine Linie, sondern ist geknickt oder gekrümmt, beispielsweise weil das Photonenfeld auf dem Weg vom Sender zum Empfänger mindestens einmal reflektiert wird. Eine solche Reflexion erleichtert es in manchen Anwendungsfällen, das Detektionssystem an die Gegebenheiten eines vorgegebenen Messbereichs anzupassen.

In einer bevorzugten Ausgestaltung umfasst das Detektionssystem eine Auswerteeinheit. Das Photonenfeld, welches den Messbereich durchdrungen hat und von der Homogenisierungsvorrichtung homogenisiert wurde, trifft erfindungsgemäß vollständig oder wenigstens zu einem Teil auf den Empfänger auf. Abhängig von dem auftreffenden Photonenfeld erzeugt der Empfänger Signale. Diese Signale werden an die optionale Auswerteeinheit übermittelt. Die optionale Auswerteeinheit wertet diese Signale automatisch aus. Bevorzugt prüft die Auswerteeinheit durch Auswertung der empfangenen Signale, ob mindestens eine bestimmte Substanz im Messbereich vorhanden ist und/oder welche Konzentration oder welchen Anteil die oder mindestens eine Substanz an dem Fluid-Gemisch im Messbereich hat. Diese Substanz kann insbesondere gasförmig oder flüssig oder pulverförmig sein. Die Auswerteeinheit löst bevorzugt einen Alarm aus, wenn die Auswertung der Signale ein vorgegebenes Kriterium erfüllt, z.B. ein Kriterium betreffend das Vorhandensein oder die Konzentration einer bestimmten Substanz im Messbereich.

In einer Ausgestaltung befinden die Homogenisierungsvorrichtung und der Empfänger sich in dem empfängerseitigen Gehäuse. Die Auswerteeinheit ist räumlich vom empfängerseitigen Gehäuse entfernt angeordnet, beispielsweise in einem gesicherten Bereich, der für einen Menschen ungefährlich ist.

Möglich ist auch, dass eine Ausgabeeinheit die vom Empfänger erzeugten Signale in einer von einem Menschen wahrnehmbaren Form ausgibt. Die Ausgabeeinheit wird z.B. von der Auswerteeinheit oder direkt vom Empfänger angesteuert.

In einer Ausgestaltung umfasst das Detektionssystem mindestens zwei Empfänger, die beabstandet voneinander angeordnet sind. Auf jeden Empfänger trifft jeweils mindestens ein Teil des homogenisierten Photonenfeldes auf. Mindestens einem Empfänger, bevorzugt jedem Empfänger, ist eine erfindungsgemäße Homogenisierungsvorrichtung flussabwärts vom Messbereich zugeordnet.

In einer Ausgestaltung umfasst das Detektionssystem eine weitere, nämlich eine senderseitige Homogenisierungsvorrichtung, die sich flussabwärts von einem optionalen Sender oder sonstigen Quelle für ein Photonenfeld und flussaufwärts von den Messbereich befindet. Diese senderseitige Homogenisierungsvorrichtung homogenisiert das Photonenfeld, welches der Sender aussendet. Diese senderseitige Homogenisierungsvorrichtung ermöglicht es, einen Sender zu verwenden, der ein Photonenfeld mit einer relativ geringen Homogenität aussendet und z.B. mindestens einen Laserstrahl aussendet. Falls die senderseitige Homogenisierungsvorrichtung außerhalb des Messbereichs angeordnet ist, so kann in Kauf genommen werden, dass diese senderseitige Homogenisierungsvorrichtung die Intensität des ausgesandten Photonenfeldes stärker reduziert als die erfindungsgemäße empfängerseitige Homogenisierungsvorrichtung flussabwärts von dem Messbereich, welche zwei Diffusoren umfasst. Denn diese stärkere Intensitäts-Reduktion lässt sich durch eine stärkere Sendeleistung des Senders kompensieren, ohne eine Gefahr im Messbereich zu verursachen. Die senderseitige Homogenisierungsvorrichtung kann nur einen einzigen Diffusor umfassen, was Platz einspart, oder ebenfalls zwei Diffusoren.

Im Folgenden wird die Erfindung anhand der beiliegenden Figuren erläutert. Hierbei zeigen schematisch:
- Figur 1: ein Gasdetektionssystem;
- Figur 2: eine erste Ausgestaltung einer Homogenisierungsvorrichtung mit einem zylindrischen oder quaderförmigen Zwischenraum;
- Figur 3: eine zweite Ausgestaltung einer Homogenisierungsvorrichtung mit dem ersten Diffusor an einer Sammellinse und einem Zwischenraum in Form eines Kegelstumpfs;
- Figur 4: eine dritte Ausgestaltung einer Homogenisierungsvorrichtung mit einer Sammellinse beabstandet zum ersten Diffusor und einem zylindrischen oder quaderförmigen Zwischenraum;
- Figur 5: eine vierte Ausgestaltung einer Homogenisierungsvorrichtung mit zwei diffus reflektierenden Diffusoren.

Die in den Figuren 2, 4 und 5 dargestellten Homogenisierungsvorrichtungen entsprechen nicht der im erfindungsgemäßen Detektionssystem vorgesehenen Homogenisierungsvorrichtung.

Im Ausführungsbeispiel wird das erfindungsgemäße Detektionssystem dafür eingesetzt, um das Vorhandensein einer Gaswolke mit mindestens einer vorgegebenen Substanz zu detektieren. "Vorgegeben" heißt, dass vorgegeben ist, auf welche Substanzen das Detektionssystem im Messbereich prüfen soll. Falls eine Gaswolke mit einer solchen Substanz detektiert wurde, so löst das Detektionssystem einen Alarm aus. In einer Ausgestaltung ermittelt das Detektionssystem zusätzlich, welche Komponenten in der Gaswolke enthalten sind, und optional den jeweiligen Anteil oder die Konzentration von verschiedenen Substanzen in der Gaswolke. Beispielsweise wird das Detektionssystem in einer Raffinerieanlage oder sonstigem chemischen Reaktor oder an einer Pipeline oder in einem Hafen oder Flughafen oder einer Tankstelle eingesetzt, um das Austreten einer explosiven oder toxischen Substanz rechtzeitig zu erkennen, damit frühzeitig entsprechende Gegenmaßnahmen ausgelöst werden können.

Figur 1 zeigt schematisch ein Detektionssystem 40 mit Bestandteilen, die sowohl im erfindungsgemäßen Detektionssystem als auch in aus dem Stand der Technik bekannten Detektionssystemen vorgesehen sind.

Zu untersuchen ist ein Messbereich 44. Beispielhaft werden zwei unterschiedliche Gaswolken 60.1 und 60.2 im Messbereich 44 dargestellt. Das Detektionssystem des Ausführungsbeispiels umfasst folgende Bestandteile:
- einen Sender 41 in einem senderseitigen Gehäuse 45.1,
- eine empfängerseitige Homogenisierungsvorrichtung 1 mit einem ersten Diffusor 10 und einem zweiten Diffusor 12,
- einen Empfänger 42,
- ein empfängerseitiges Gehäuse 45.2, welches die Homogenisierungsvorrichtung 1 und den Empfänger 42 aufnimmt,
- eine datenverarbeitende Auswerteeinheit 43, die räumlich entfernt vom empfängerseitigen Gehäuse 45.2 angeordnet ist,
- eine Datenverbindung 46, über welche Signale vom Empfänger 42 zur Auswerteeinheit 43 übermittelt werden können, sowie
- eine Ausgabeeinheit 48, welche von der Auswerteeinheit 43 angesteuert wird und Alarme in einer von einem Menschen wahrnehmbaren Form auszugeben vermag.

Der Sender 41 sendet ein Photonenfeld 50 in den Messbereich 44 hinein. Optional ist zwischen dem Sender 41 und dem Messbereich 44 eine senderseitige Homogenisierungsvorrichtung 2 angeordnet, welche das ausgesandte Photonenfeld 50 homogenisiert, bevor es den Messbereich 44 erreicht. Wenn im Folgenden von "der Homogenisierungsvorrichtung" die Rede ist, so ist damit die empfängerseitige Homogenisierungsvorrichtung 1 gemeint.

Wenigstens ein Teil des vom Sender 41 ausgesandten Photonenfelds 50 durchdringt den Messbereich 44 in eine Feldrichtung 54 und trifft auf die Homogenisierungsvorrichtung 1 auf. Die Homogenisierungsvorrichtung 1 homogenisiert den auftreffenden Teil des Photonenfelds 50. Das homogenisierte Photonenfeld 50 trifft auf den Empfänger 42. Abhängig von Eigenschaften des auftreffenden Photonenfeldes 50 erzeugt der Empfänger 42 wenigstens zeitweise Signale. Diese Signale 42 werden über die Datenverbindung 46 an die Auswerteeinheit 43 übermittelt. Die Auswerteeinheit 43 wertet automatisch die empfangenen Signale aus und prüft, ob sich in einer Gaswolke 60.1, 60.2 mindestens eine vorgegebene Substanz befindet oder nicht, also eine Substanz, deren Vorhandensein zu prüfen ist. Optional ermittelt sie die Zusammensetzung einer Gaswolke 60.1, 60.2 und/oder den Anteil oder die Konzentration mindestens einer Substanz in dieser Gaswolke 60.1, 60.2. Falls das auswählte Ergebnis ein vorgegebenes Kriterium erfüllt, löst die Auswerteeinheit 43 einen Alarm auf der Ausgabeeinheit 48 aus.

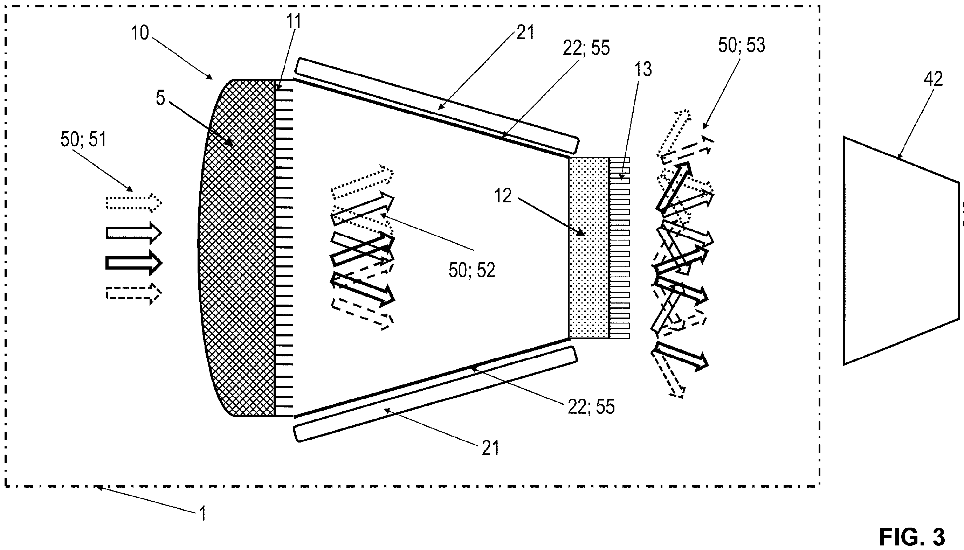

Figur 2 bis Figur 5 zeigen vier verschiedene Ausgestaltungen einer zweistufigen Homogenisierungsvorrichtung 1. Figur 3 zeigt eine in einem erfindungsgemäßen Detektionssystem vorgesehene Ausgestaltung, Figur 2, Figur 4 und Figur 5 zeigen weitere Ausgestaltungen. Gezeigt werden jeweils der erste Diffusor 10, der zweite Diffusor 12, die Feldrichtung 54 sowie der Empfänger 42. Der erste Diffusor 10 homogenisiert in jeder Ausgestaltung ein auftreffendes Eingangs-Photonenfeld 51 und erzeugt ein Zwischen-Photonenfeld 52, welches eine größere Homogenisierung aufweist als das Eingangs-Photonenfeld 51. Der zweite Diffusor 12 homogenisiert das auftreffende Zwischen-Photonenfeld 52 und erzeugt ein Ausgangs-Photonenfeld 53, welches eine höhere Homogenisierung als das Zwischen-Photonenfeld 52 aufweist. Durch unterschiedliche Pfeile im Photonenfeld 50 werden unterschiedliche Intensitäten in verschiedenen Bereichen des Photonenfeldes 50 angedeutet.

In den gezeigten Ausgestaltungen trifft das Photonenfeld 50 nach dem Durchgang durch den Messbereich 44 auf den ersten Diffusor 10 auf und fungiert somit als das Eingangs-Photonenfeld 51. Das in zwei Stufen homogenisierte Ausgangs-Photonenfeld 53 trifft auf den Empfänger 42 auf. Möglich ist auch, dass zwischen dem Messbereich 44 und dem ersten Diffusor 10 und/oder zwischen dem zweiten Diffusor 12 und dem Empfänger 42 ein weiterer Bestandteil angeordnet ist, welcher das Photonenfeld 50 verändert.

Figur 2 zeigt weiterhin die Dicke 15 des ersten Diffusors 10. In der ersten Ausgestaltung gemäß Figur 2 weist der erste Diffusor 10 über seine gesamte Ausdehnung eine gleichbleibende Dicke 15 auf. Der zweite Diffusor 12 weist ebenfalls über seine gesamte Ausdehnung diese Dicke 15 auf. Die Dicke 15 ist so groß wie nötig, um eine gewünschte Homogenisierungswirkung und einen mechanisch ausreichend stabilen Diffusor 10 bzw. 12 zu erzielen, und andererseits so gering wie möglich, damit ein möglichst geringer Anteil des auftreffenden Photonenfeldes 50 absorbiert oder rückgestreut wird. In der ersten Ausgestaltung gemäß Figur 2 sind beide Diffusoren 10 und 12 jeweils als ein Volumen-Diffusor ausgestaltet, beispielsweise als eine facettierte Linse. Die beiden Diffusoren 10 und 12 können auch als Oberflächen-Diffusoren ausgestaltet sein.

Figur 2 zeigt weiterhin einen Diffusor-Abstand 14 zwischen dem ersten Diffusor 10 und dem zweiten Diffusor 12. Dieser Abstand liegt im Ausführungsbeispiel zwischen 1 mm und 30 mm und beträgt besonders bevorzugt etwa 10 mm. Weiterhin wird ein Empfänger-Abstand 32 zwischen dem zweiten Diffusor 12 und dem Empfänger 42 gezeigt. Im Ausführungsbeispiel liegt dieser Empfänger-Abstand 32 zwischen 1 mm und 30 mm und beträgt besonders bevorzugt ebenfalls etwa 10 mm. Bevorzugt beträgt der Empfänger-Abstand 32 ein Vielfaches, bevorzugt mindestens das Fünffache, besonders bevorzugt mindestens das Zehnfache der Dicke 15 des zweiten Diffusors 12.

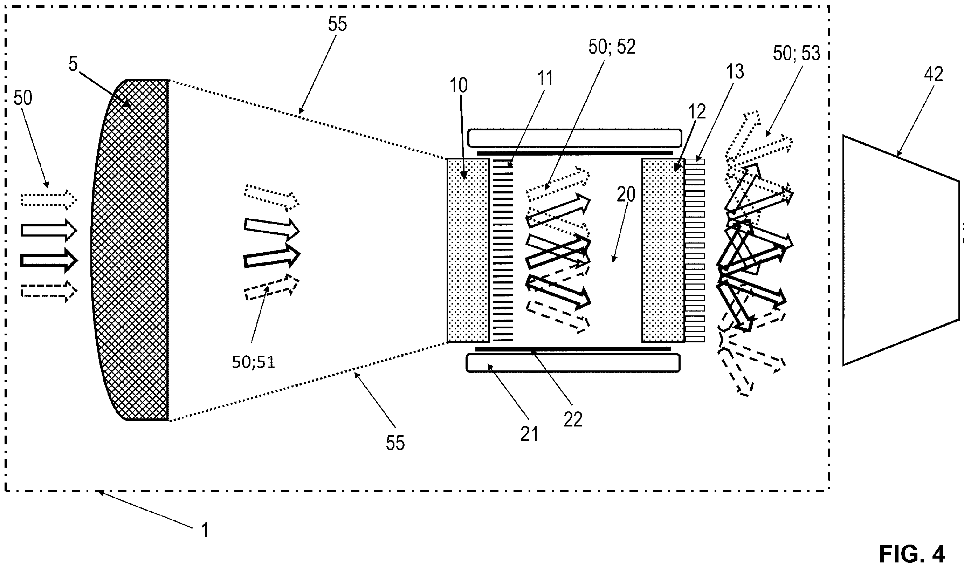

In den gezeigten Ausgestaltungen umschließen der erste Diffusor 10, der zweite Diffusor 12 sowie eine Mantelfläche 2 einen bevorzugt vollständig abgeschlossenen und bevorzugt mit Luft gefüllten Zwischenraum 20. Das Zwischen-Photonenfeld 52 durchdringt in die Feldrichtung 54 diesen Zwischenraum 20. Dieser Zwischenraum 20 hat bei der ersten Ausgestaltung gemäß Figur 2 und bei der dritten Ausgestaltung gemäß Figur 4 die Form eines Zylinders oder eines Quader und bei der zweiten Ausgestaltung gemäß Figur 3 die Form eines Kegelstumpfs. In den gezeigten Ausgestaltungen ist auf diejenige Wand der Mantelfläche 21, die zum Zwischenraum 20 hin zeigt, mindestens ein Spiegel 22 oder eine reflektierende Oberfläche aufgebracht, welcher auftreffende Photonen reflektiert, sodass diese Photonen im Zwischenraum 20 bleiben und nicht den Zwischenraum 20 durch die Mantelfläche 21 hindurch verlassen.

In den ersten drei Ausgestaltungen sind beide Diffusoren 10 und 12 als transmittierende Diffusoren ausgebildet, welche das Photonenfeld 50 diffus transmittieren. Transmittieren bedeutet: Die Feldrichtung 54 des Photonenfeldes ändert sich beim Durchgang durch den Diffusor nicht.

Bei der zweiten Ausgestaltung gemäß Figur 3 sowie der dritten Ausgestaltung gemäß Figur 4 bündelt ein Optikelement 5 in Form einer fokussierenden Sammellinse das auftreffende Eingangs-Photonenfeld 51. Die Sammellinse 5 steigert die Intensität pro Flächeneinheit des Photonenfeldes 50 und ist bevorzugt zwischen den Messbereich 44 und dem ersten Diffusor 10 angeordnet. Dargestellt wird der Fokuskegel 55, den die Sammellinse 5 erzielt. Sowohl bei der zweiten als auch bei der dritten Ausgestaltung sind sowohl der erste Diffusor 10 als auch der zweite Diffusor 12 jeweils als ein Oberflächen-Diffusor ausgestaltet. Bei der zweiten Ausgestaltung gemäß Figur 3 bildet der erste Diffusor 10 ein Teil des Optikelements 5. Die zum Zwischenraum 20 hin zeigenden Oberfläche 11 des ersten Diffusors 10 bewirkt die Homogenisierung des Eingangs-Photonenfelds 51. Das durch die Homogenisierung erzeugte Zwischen-Photonenfeld 52 ist also fokussiert, weist also bevorzugt eine größere Intensität pro Volumeneinheit auf, und außerdem eine höhere Homogenität als das Eingangs-Photonenfeld 51. Die zum Empfänger 42 hin zeigenden Oberfläche 13 des zweiten Diffusors 12 bewirkt, dass das Zwischen-Photonenfeld 52 homogenisiert wird.

Bei der dritten Ausgestaltung gemäß Figur 4 tritt ein Abstand zwischen dem Optikelement 5 und dem ersten Diffusor 10 auf. Das Eingangs-Photonenfeld 51, welches auf den ersten Diffusor 10 auftritt, ist bereits im Vergleich zum Photonenfeld 50, welches auf die Homogenisierungsvorrichtung 1 auftritt, fokussiert.

Bei der ersten Ausgestaltung gemäß Figur 2 sind beide Diffusoren 10 und 12 als Volumen-Diffusoren ausgestaltet, bei der zweiten und der dritten Ausgestaltung gemäß Figur 3 bzw. Figur 4 als Oberflächen-Diffusoren. Möglich ist auch, dass der erste Diffusor 10 als ein Volumen-Diffusor und der zweite Diffusor 12 als ein Oberflächen-Diffusor ausgestaltet ist oder umgekehrt.

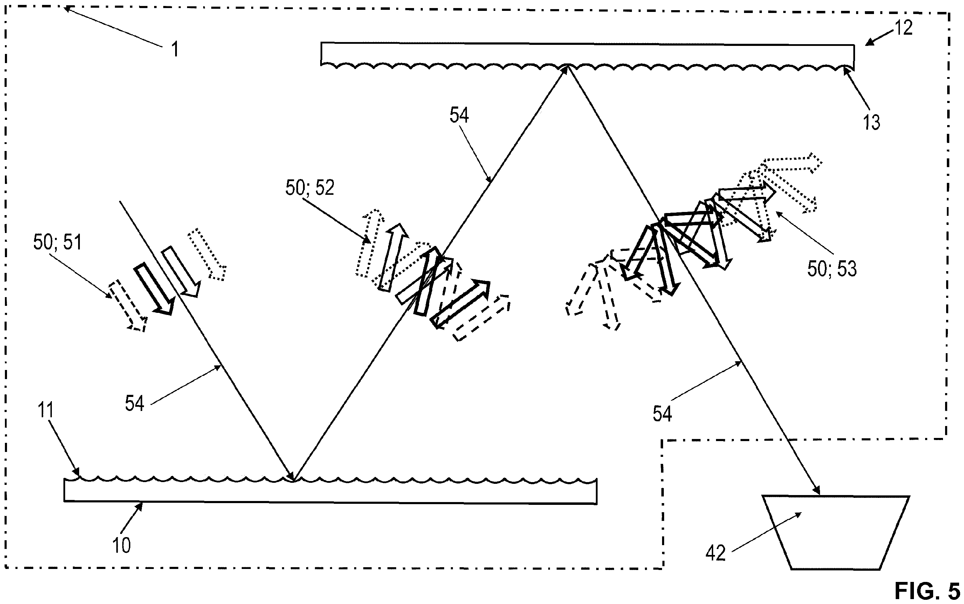

In der vierten Ausgestaltung gemäß Figur 5 sind beide Diffusoren 10 und 12 dazu ausgestaltet, ein auftreffendes Photonenfeld 50 diffus zu reflektieren und hierbei zu homogenisieren. Wie zu sehen ist, ändert die Feldrichtung 54 durch die beiden Reflexionen an den beiden Diffusoren 10 und 12 zweimal ihre Richtung, nämlich gemäß dem bekannten Prinzip Einfallswinkel gleich Ausfallswinkel. Beide Diffusoren 10 und 12 sind wiederum als Oberflächen-Diffusoren ausgestaltet, wobei die Oberfläche 11 bzw. 13 die gewünschte diffus streuende Wirkung erzeugt.

### BEZUGSZEICHENLISTE

| | |
|---|---|
| 1 | zweistufige empfängerseitige Homogenisierungsvorrichtung, umfasst den ersten Diffusor 10, den zweiten Diffusor 12, die Mantelfläche 21 und optional das Optikelement 5 |
| 2 | einstufige senderseitige Homogenisierungsvorrichtung, zwischen dem Sender 54 und dem Messbereich 44 angeordnet |
| 5 | Optikelement in Form einer Sammellinse, zwischen dem Messbereich 44 und dem ersten Diffusor 10 angeordnet |
| 10 | erster Diffusor der Homogenisierungsvorrichtung 1 |
| 11 | Oberfläche des ersten Diffusors 10, bewirkt, dass das Eingangs-Photonenfeld 51 diffus gestreut und dadurch homogenisiert wird |
| 12 | zweiter Diffusor der Homogenisierungsvorrichtung 1 |
| 13 | Oberfläche des zweiten Diffusors 12, bewirkt, dass das Zwischen-Photonenfeld 52 diffus gestreut und dadurch weiter homogenisiert wird |
| 14 | Diffusor-Abstand zwischen dem ersten Diffusor 10 und dem zweiten Diffusor 12 |
| 15 | bevorzugt gleichbleibende Dicke eines Diffusors 10, 12 |
| 20 | Zwischenraum zwischen den beiden Diffusoren 10 und 12, zusätzlich von der Mantelfläche 21 umgeben |
| 21 | Mantelfläche der Homogenisierungsvorrichtung 1, umgibt den Zwischenraum 20, reflektiert das Photonenfeld 50 |
| 22 | Spiegel, innen an der Mantelfläche 21 angeordnet |
| 40 | Detektionssystem, umfasst den Sender 41, den Empfänger 42, die Auswerteeinheit 43, die Ausgabeeinheit 48 und die Homogenisierungsvorrichtung 1 |
| 41 | Sender, sendet das Photonenfeld 50 in den Messbereich 44 hinein |
| 42 | Empfänger, erzeugt abhängig vom auftreffenden Photonenfeld 50 Signale, im empfängerseitigen Gehäuse 45.2 angeordnet |
| 43 | Auswerteeinheit des Empfängers 42, wertet Signale vom Empfänger 42 aus, steuert die Ausgabeeinheit 48 an |
| 44 | zu untersuchender Messbereich, enthält die beiden Gaswolken 60.1 und 60.2 |
| 45.1 | senderseitigen Gehäuse, nimmt den Sender 54 auf |
| 45.2 | empfängerseitiges Gehäuse, nimmt den Empfänger 42 und die Homogenisierungsvorrichtung 1 auf |
| 46 | Datenverbindung zwischen den Empfänger 42 und der Auswerteeinheit 43 |
| 48 | Ausgabeeinheit, gibt Alarme aus, wird von der Auswerteeinheit 43 angesteuert |
| 50 | Photonenfeld, vom Sender 41 ausgesandt, trifft wenigstens teilweise auf den Empfänger 42 |
| 51 | Eingangs-Photonenfeld, trifft auf den ersten Diffusor 10 auf |
| 52 | Zwischen-Photonenfeld, vom ersten Diffusor 10 erzeugt, durchdringt den Zwischenraum 20 und trifft auf den zweiten Diffusor 12 auf |
| 53 | Ausgangs-Photonenfeld, vom zweiten Diffusor 12 erzeugt, trifft auf den Empfänger 42 auf |
| 54 | Feldrichtung des ausgesandten Photonenfeldes 50 |
| 55 | Fokuskegel, den die Sammellinse 5 erzeugt |
| 60.1, 60.2 | zu detektierende und/oder zu untersuchende Gaswolken im Messbereich 44 |

## Patentansprüche

1. Detektionssystem (40) zum Detektieren mindestens einer Substanz in einem Messbereich (44),
wobei das Detektionssystem (40)
eine empfängerseitige Homogenisierungsvorrichtung (1) und
einen Empfänger (42) umfasst,
wobei die Homogenisierungsvorrichtung (1)
dazu ausgestaltet ist, wenigstens einen Teil eines Photonenfelds (50), welches in einer Feldrichtung (54) aus dem Messbereich (44) austritt, zu homogenisieren und einen ersten Diffusor (10), einen zweiten Diffusor (12) und eine Sammellinse (5) umfasst,
wobei gesehen in die Feldrichtung (54) der erste Diffusor (10) dergestalt flussabwärts von dem Messbereich (44) und der zweite Diffusor (12) flussabwärts vom ersten Diffusor (10) und mit einem Diffusor-Abstand (14) zum ersten Diffusor (10) angeordnet ist,
dass wenigstens ein Teil des aus dem Messbereich (44) austretenden Photonenfelds (50) beide Diffusoren (10, 12) durchdringt,
wobei der erste Diffusor (10) dazu ausgestaltet ist, ein auf die Homogenisierungsvorrichtung (1) auftreffendes Eingangs-Photonenfeld (51) zu homogenisieren und dadurch ein Zwischen-Photonenfeld (52) zu erzeugen, wobei der zweite Diffusor (12) dazu ausgestaltet ist, das Zwischen-Photonenfeld (52) weiter zu homogenisieren und dadurch ein Ausgangs-Photonenfeld (53) zu erzeugen, welches sich in die Feldrichtung (54) auf den Empfänger (42) zu fortpflanzt, und
wobei der Empfänger (42)
- gesehen in die Feldrichtung (54) flussabwärts von dem zweiten Diffusor (12) angeordnet ist,
- so angeordnet ist, dass wenigstens ein Teil des aus dem Messbereich (44) ausgetretenen und homogenisierten Photonenfelds (50) auf den Empfänger (42) auftrifft, und
- dazu ausgestaltet ist, abhängig von dem auftreffenden Photonenfeld (50) Signale zu erzeugen,
**dadurch gekennzeichnet, dass**
der erste Diffusor (10) an der Sammellinse (5) angeordnet ist oder einen Bestandteil der Sammellinse (5) bildet.

2. Detektionssystem (40) nach Anspruch 1, **dadurch gekennzeichnet, dass** die Position der Homogenisierungsvorrichtung (1) relativ zum Empfänger (42) unveränderlich ist.

3. Detektionssystem (40) nach einem der vorhergehenden Ansprüche, **dadurch gekennzeichnet, dass** die Homogenisierungsvorrichtung (1) eine Mantelfläche (21) umfasst,
wobei der erste Diffusor (10), der zweite Diffusor (12) und die Mantelfläche (21) zusammen einen Zwischenraum (20) umschließen, der vom Zwischen-Photonenfeld (52) durchdringbar ist.

4. Detektionssystem (40) nach Anspruch 3, **dadurch gekennzeichnet, dass** die Homogenisierungsvorrichtung (1) so ausgestaltet ist, dass das Zwischen-Photonenfeld (52) den Zwischenraum (20) durchdringt, ohne im Zwischenraum (20) diffus gestreut zu werden.

5. Detektionssystem (40) nach Anspruch 3 oder Anspruch 4 **dadurch gekennzeichnet, dass** die Mantelfläche (21) mindestens einen Spiegel (22) umfasst oder als ein Spiegel (22) ausgebildet ist,
wobei der oder jeder Spiegel (22) der Mantelfläche (21) dazu ausgestaltet ist, das Zwischen-Photonenfeld (52) in den Zwischenraum (20) hinein zu reflektieren.

6. Detektionssystem (40) nach einem der vorhergehenden Ansprüche, **dadurch gekennzeichnet, dass** mindestens einer der beiden Diffusoren (10, 20), bevorzugt der erste Diffusor (10), als ein Volumen-Diffusor, insbesondere als ein Facetten-Diffusor, ausgestaltet ist.

7. Detektionssystem (40) nach einem der vorhergehenden Ansprüche, **dadurch gekennzeichnet, dass** mindestens einer der beiden Diffusoren (10, 20), bevorzugt der zweite Diffusor (20), als ein Oberflächen-Diffusor ausgestaltet ist und insbesondere eine aufgeraute Oberfläche (13) aufweist.

8. Detektionssystem (40) nach einem der vorhergehenden Ansprüche , **dadurch gekennzeichnet, dass** der erste Diffusor (10) dazu ausgestaltet ist, aus dem Eingangs-Photonenfeld (50) durch Transmittieren das Zwischen-Photonenfeld (52) zu erzeugen,
wobei die Feldrichtung (54) bei diesem Transmittieren unverändert bleibt.

9. Detektionssystem (40) nach einem der vorhergehenden Ansprüche, **dadurch gekennzeichnet, dass** der zweite Diffusor (10) dazu ausgestaltet ist, aus dem Zwischen-Photonenfeld (52) durch Transmittieren das Ausgangs-Photonenfeld (53) zu erzeugen,
wobei die Feldrichtung (54) bei diesem Transmittieren unverändert bleibt.

10. Detektionssystem (40) nach einem der vorhergehenden Ansprüche, **dadurch gekennzeichnet, dass** das Detektionssystem (40) einen Sender (41) umfasst, wobei der Sender (41) dazu ausgestaltet ist, ein Photonenfeld (50) dergestalt in den Messbereich (44) hinein auszusenden,
dass wenigstens ein Teil des Photonenfelds (50) den Messbereich (44) und die Homogenisierungsvorrichtung (1) durchdringt und auf den Empfänger (42) auftrifft,
wobei die Position der Homogenisierungsvorrichtung (1) relativ zum Sender (41) veränderbar ist,
insbesondere der Abstand zwischen dem Sender (41) und der Homogenisierungsvorrichtung (1) zwischen einem vorgegebenen Mindest-Abstand und einem vorgegebenen Höchst-Abstand stufenlos veränderbar ist.

11. Detektionssystem (40) nach Anspruch 10, **dadurch gekennzeichnet, dass** der Sender (41) in einem senderseitigen Gehäuse (45.1) angeordnet ist und die Homogenisierungsvorrichtung (1) und der Empfänger (42) gemeinsam in einem empfängerseitigen Gehäuse (45.2) angeordnet sind,
wobei der Abstand zwischen den beiden Gehäusen (45.1, 45.2) veränderbar ist,
insbesondere zwischen dem vorgegebenen Mindest-Abstand und dem vorgegebenen Höchst-Abstand stufenlos veränderbar ist.

## Claims

1. Detection system (40) for detecting at least one substance in a measurement region (44),
wherein the detection system (40) comprises a receiver-side homogenization apparatus (1) and a receiver (42),
wherein the homogenization apparatus (1) is configured to homogenize at least a part of a photon field (50) that emerges from the measurement region (44) in a field direction (54) and
comprises a first diffuser (10), a second diffuser (12) and a converging lens (5),
wherein, viewed in the field direction (54), the first diffuser (10) is arranged downstream of the measurement region (44) and the second diffuser (12) is arranged downstream of the first diffuser (10) and at a diffuser distance (14) from the first diffuser (10) in a manner such that at least a part of the photon field (50) emerging from the measurement region (44) penetrates both diffusers (10, 12),
wherein the first diffuser (10) is configured to homogenize an input photon field (51) incident on the homogenization apparatus (1) and thereby to produce an intermediate photon field (52),
wherein the second diffuser (12) is configured to further homogenize the intermediate photon field (52) and thereby to produce an output photon field (53) that propagates in the field direction (54) towards the receiver (42), and wherein the receiver (42),
- viewed in the field direction (54), is arranged downstream of the second diffuser (12) in a manner such
- that at least a part of the homogenized photon field (50) that has emerged from the measurement region (44) is incident on the receiver (42), and
- is configured to produce signals depending on the incident photon field (50),
**characterized in that**
the first diffuser (10) is arranged at the converging lens (5) or forms an integral part of the converging lens (5).

2. Detection system (40) according to Claim 1, **characterized in that** the position of the homogenization apparatus (1) relative to the receiver (42) is invariable.

3. Detection system (40) according to either of the preceding claims, **characterized in that** the homogenization apparatus (1) comprises a lateral surface (21),
wherein the first diffuser (10), the second diffuser (12) and the lateral surface (21) together enclose an intermediate space (20) which is penetrable by the intermediate photon field (52).

4. Detection system (40) according to Claim 3, **characterized in that** the homogenization apparatus (1) is configured such that the intermediate photon field (52) penetrates the intermediate space (20) without being diffusely scattered in the intermediate space (20).

5. Detection system (40) according to Claim 3 or Claim 4, **characterized in that** the lateral surface (21) comprises at least one mirror (22) or is in the form of a mirror (22),
wherein the or each mirror (22) of the lateral surface (21) is configured to reflect the intermediate photon field (52) into the intermediate space (20).

6. Detection system (40) according to any of the preceding claims, **characterized in that** at least one of the two diffusers (10, 20), preferably the first diffuser (10), is designed as a volume diffuser, in particular as a facet diffuser.

7. Detection system (40) according to any of the preceding claims, **characterized in that** at least one of the two diffusers (10, 20), preferably the second diffuser (20), is designed as a surface diffuser and in particular has a roughened surface (13).

8. Detection system (40) according to any of the preceding claims, **characterized in that** the first diffuser (10) is configured to produce the intermediate photon field (52) from the input photon field (50) by way of transmission,
wherein the field direction (54) remains unchanged during this transmission.

9. Detection system (40) according to any of the preceding claims, **characterized in that** the second diffuser (10) is configured to produce the output photon field (53) from the intermediate photon field (52) by way of transmission,
wherein the field direction (54) remains unchanged during this transmission.

10. Detection system (40) according to any of the preceding claims, **characterized in that** the detection system (40) comprises a transmitter (41), wherein the transmitter (41) is configured to emit a photon field (50) into the measurement region (44) in a manner such
that at least a part of the photon field (50) penetrates the measurement region (44) and the homogenization apparatus (1) and is incident on the receiver (42),
wherein the position of the homogenization apparatus (1) relative to the transmitter (41) is variable,
in particular the distance between the transmitter (41) and the homogenization apparatus (1) is infinitely variable between a specified minimum distance and a specified maximum distance.

11. Detection system (40) according to Claim 10, **characterized in that** the transmitter (41) is arranged in a transmitter-side housing (45.1) and the homogenization apparatus (1) and the receiver (42) are jointly arranged in a receiver-side housing (45.2),
wherein the distance between the two housings (45.1, 45.2) is variable,
in particular is infinitely variable between the specified minimum distance and the specified maximum distance.

## Revendications

1. Système de détection (40) pour détecter au moins une substance dans une zone de mesure (44),
le système de détection (40) comprenant un dispositif d'homogénéisation (1) côté récepteur et un récepteur (42),
le dispositif d'homogénéisation (1) étant conçu pour homogénéiser au moins une partie d'un champ photonique (50) qui sort de la zone de mesure (44) dans une direction de champ (54), et comprend un premier diffuseur (10), un deuxième diffuseur (12) et une lentille convergente (5),
le premier diffuseur (10) étant disposé, vu dans la direction de champ (54), en aval de la zone de mesure (44) et le deuxième diffuseur (12) en aval du premier diffuseur (10) et à une distance de diffuseur (14) du premier diffuseur (10) de telle sorte qu'au moins une partie du champ photonique (50) sortant de la zone de mesure (44) traverse les deux diffuseurs (10, 12),
le premier diffuseur (10) étant conçu pour homogénéiser un champ photonique d'entrée (51) arrivant sur le dispositif d'homogénéisation (1) et générer ainsi un champ photonique intermédiaire (52),
le deuxième diffuseur (12) étant conçu pour homogénéiser davantage le champ photonique intermédiaire (52) et produire ainsi un champ photonique de sortie (53) qui se propage dans la direction de champ (54) vers le récepteur (42), et le récepteur (42) étant conçu pour être placé dans une position de réception, et
le récepteur
- étant disposé, vu dans la direction de champ (54), en aval du deuxième diffuseur (12),
- étant disposé de telle sorte qu'au moins une partie du champ photonique (50) sorti de la zone de mesure (44) et homogénéisé arrive sur le récepteur (42), et
- étant conçu pour générer des signaux en fonction du champ photonique arrivant (50),
**caractérisé en ce que**
le premier diffuseur (10) est disposé sur la lentille convergente (5) ou forme une partie intégrante de la lentille convergente (5).

2. Système de détection (40) selon la revendication 1, **caractérisé en ce que** la position du dispositif d'homogénéisation (1) par rapport au récepteur (42) ne peut pas être changée.

3. Système de détection (40) selon l'une des revendications précédentes, **caractérisé en ce que** le dispositif d'homogénéisation (1) comprend une surface enveloppante (21),
le premier diffuseur (10), le deuxième diffuseur (12) et la surface enveloppante (21) délimitant ensemble un espace intermédiaire (20) qui peut être traversé par le champ photonique intermédiaire (52).

4. Système de détection (40) selon la revendication 3, **caractérisé en ce que** le dispositif d'homogénéisation (1) est conçu de telle sorte que le champ photonique intermédiaire (52) traverse l'espace intermédiaire (20) sans être dispersé de manière diffuse dans l'espace intermédiaire (20).

5. Système de détection (40) selon la revendication 3 ou la revendication 4, **caractérisé en ce que** la surface enveloppante (21) comprend au moins un miroir (22) ou est réalisée sous la forme d'un miroir (22),
le ou chaque miroir (22) de la surface enveloppante (21) étant conçu pour réfléchir le champ photonique intermédiaire (52) dans l'espace intermédiaire (20).

6. Système de détection (40) selon l'une des revendications précédentes, **caractérisé en ce qu'**au moins l'un des deux diffuseurs (10, 20), de préférence le premier diffuseur (10), est conçu comme un diffuseur volumique, en particulier comme un diffuseur à facettes.

7. Système de détection (40) selon l'une des revendications précédentes, **caractérisé en ce qu'**au moins l'un des deux diffuseurs (10, 20), de préférence le deuxième diffuseur (20), est conçu comme un diffuseur surfacique et présente en particulier une surface rugueuse (13).

8. Système de détection (40) selon l'une des revendications précédentes, **caractérisé en ce que** le premier diffuseur (10) est conçu pour générer le champ photonique intermédiaire (52) à partir du champ photonique d'entrée (50) par transmission,
la direction de champ (54) restant inchangée lors de cette transmission.

9. Système de détection (40) selon l'une des revendications précédentes, **caractérisé en ce que** le deuxième diffuseur (10) est conçu pour générer le champ photonique de sortie (53) à partir du champ photonique intermédiaire (52) par transmission,
la direction de champ (54) restant inchangée lors de cette transmission.

10. Système de détection (40) selon l'une des revendications précédentes, **caractérisé en ce que** le système de détection (40) comprend un émetteur (41), l'émetteur (41) étant conçu pour émettre un champ photonique (50) dans la zone de mesure (44) de telle sorte qu'au moins une partie du champ photonique (50) traverse la zone de mesure (44) et le dispositif d'homogénéisation (1), et arrive sur le récepteur (42),
la position du dispositif d'homogénéisation (1) par rapport à l'émetteur (41) pouvant être changée,
en particulier la distance entre l'émetteur (41) et le dispositif d'homogénéisation (1) pouvant être changée en continu entre une distance minimale prédéfinie et une distance maximale prédéfinie.

11. Système de détection (40) selon la revendication 10, **caractérisé en ce que** l'émetteur (41) est disposé dans un boîtier côté émetteur (45.1) et le dispositif d'homogénéisation (1) et le récepteur (42) sont disposés ensemble dans un boîtier côté récepteur (45.2),
la distance entre les deux boîtiers (45.1, 45.2) pouvant être changée,
en particulier pouvant être changée en continu entre la distance minimale prédéterminée et la distance maximale prédéterminée.
